# EUROPÄISCHE PATENTANMELDUNG

(11) **EP 1 698 882 A2**
(43) Veröffentlichungstag der Anmeldung: **06.09.2006**
(21) Anmeldenummer: 06100740.7
(22) Anmeldetag: 24.01.2006
(51) Int. Cl.: G01N 11/16

(54) **Vorrichtung und Verfahren zur Messung von Eigenschaften eines fluiden Mediums**

(30) Priorität: 01.03.2005 DE 102005009143
(71) Anmelder: ROBERT BOSCH GMBH, 70442 Stuttgart (DE)
(72) Erfinder: Niemann, Markus, 66701, Beckingen (DE)

(57) **Zusammenfassung**

Die vorliegende Erfindung schafft eine Messvorrichtung zur Messung von Eigenschaften eines fluiden Mediums (100) mit einer Schwingungseinrichtung (101) zur Anregung von Schwingungen in dem fluiden Medium (100) und zur Ausgabe eines Sensorsignals (201), einer Treibereinrichtung (102) zum Treiben der Schwingungseinrichtung (101) mit einem Anregungssignal (104), einer Erfassungseinrichtung (103) zur Erfassung des aus der Schwingungseinrichtung (101) in Abhängigkeit von den Eigenschaften des fluiden Mediums (100) und dem Anregungssignal (104) ausgegebenen Sensorsignals (201) und einer Auswerteeinrichtung (300) zur Auswertung des aus der Schwingungseinrichtung (101) ausgegebenen und mit der Erfassungseinrichtung (103) erfassten Sensorsignals (201) und zur Bestimmung der Eigenschaften des fluiden Mediums (100). Eine Zeitperioden-Auswerteeinheit (301), die in der Auswerteeinrichtung (300) angeordnet ist, dient einer Auswertung einer für die Eigenschaften des fluiden Mediums (100) charakteristischen Zeitdauer (202) des Sensorsignals (201).

## Beschreibung

### STAND DER TECHNIK

Die vorliegende Erfmdung betrifft allgemein eine Vorrichtung und ein Verfahren zur Bestimmung der Eigenschaften eines fluiden Mediums, insbesondere der Viskosität eines Mediums mittels einer Schwingquarz-Messanordnung. Insbesondere betrifft die vorliegende Erfindung ein Verfahren zur Auswertung des von dem Schwingquarz in Abhängigkeit von den Eigenschaften des fluiden Mediums und eines Anregungssignals für den Schwingquarz ausgegebenen Sensorsignals.

Spezifisch betrifft die vorliegende Erfindung eine Messvorrichtung zur Messung von Eigenschaften eines fluiden Mediums mit einer Schwingungseinrichtung zur Anregung von Schwingungen in dem fluiden Medium und zur Ausgabe eines Sensorsignals, einer Treibereinrichtung zum Treiben der Schwingungseinrichtung mit dem Anregungssignal, einer Erfassungseinrichtung zur Erfassung des aus der Schwingungseinrichtung in Abhängigkeit von den Eigenschaften des fluiden Mediums und dem Anregungssignal ausgegebenen Sensorsignals und einer Auswerteeinrichtung zur Auswertung des aus der Schwingungseinrichtung ausgegebenen und mit der Erfassungseinrichtung erfassten Sensorsignals und zur Bestimmung der Eigenschaften des fluiden Mediums.

Herkömmliche Verfahren und Vorrichtungen zur Auswertung von durch eine Sensoreinrichtung gelieferte Signale, insbesondere hinsichtlich einer Viskosität eines Mediums, sind z.B. aus der DE 199 58 769 A1 bekannt. Üblicherweise werden zur Viskositätsmessung piezoelektrische Dickenscherschwinger eingesetzt, welche beispielsweise aus Quarz hergestellt sind. Wird ein solcher Dickenscherschwinger in eine viskose Flüssigkeit getaucht, so ändert sich seine Resonanzfrequenz der Eigenschwingung und deren Dämpfung in Abhängigkeit von der Viskosität und der Dichte der viskosen Flüssigkeit.

Die dynamische Viskosität und die Dichte der viskosen Flüssigkeit bestimmen den Widerstand und die Induktivität eines R-L-Resonators. Die in Abhängigkeit von der Dichte und der Viskosität des viskosen Mediums variierbaren elektrischen Parameter L und R bestimmen die Eigenschaften des Oszillators derart, dass diese in einer Auswerteschaltung erfasst werden können. Üblicherweise wird ein spannungsgesteuerter Oszillator VCO (Voltage Controlled Oscillator) eingesetzt, welcher den in die Flüssigkeit getauchten Resonator R speist, wobei das Ausgangssignal des Resonators R mit einem Referenzsignal REF in einem Multiplizierer gemischt wird. Ein Gleichstromanteil des sich durch die Mischung bzw. Multiplikation ergebenden Signals wird anschließend in einer Tiefpassfiltereinrichtung ermittelt. Der Verlauf dieses Ausgangssignals über der Frequenz des spannungsgesteuerten Oszillators VCO wird schließlich zur Bestimmung der Viskosität des fluiden Mediums herangezogen.

Ein Nachteil derartiger Messvorrichtungen besteht jedoch darin, dass eine parasitäre Kapazität der als ein Schwingquarz ausgebildeten Schwingungseinrichtung, welche sich in dem zu messenden fluiden Medium befindet, durch die Messanordnung kompensiert oder durch die anschließende Berechnung eliminiert werden muss. Der hierfür erforderliche schaltungstechnische Aufwand ist in unzweckmäßiger Weise sehr hoch. Ferner ist es äußerst nachteilig, dass die Genauigkeit derartiger Auswerteverfahren eingeschränkt ist.

### VORTEILE DER ERFINDUNG

Es ist daher eine Aufgabe der vorliegenden Erfindung, eine Messvorrichtung und ein Messverfahren zur Messung von Eigenschaften eines fluiden Mediums bereitzustellen, bei welchem Unsicherheiten bei der Bestimmung der Eigenschaften des viskosen Mediums durch die Auswertung des von der Schwingungseinrichtung gelieferten Sensorsignals vermieden werden.

Diese Aufgabe wird erfindungsgemäß durch eine Messvorrichtung zur Messung von Eigenschaften eines fluiden Mediums mit den Merkmalen des Patentanspruchs 1 gelöst.

Ferner wird die Aufgabe durch ein im Patentanspruch 6 angegebenes Messverfahren gelöst.

Weitere Ausgestaltungen der Erfindung ergeben sich aus den Unteransprüchen.

Ein wesentlicher Gedanke der Erfmdung besteht darin, das aus der Schwingungseinrichtung ausgegebene und mit einer Erfassungseinrichtung erfasste Sensorsignal hinsichtlich einer für die Eigenschaften des fluiden Mediums charakteristischen Zeitdauer des Sensorsignals auszuwerten.

Zweckmäßig ist es, neben einer üblichen Auswertung der Amplitude des Sensorsignals eine zweite, von der Amplitude unabhängige Signaleigenschaft zur Bestimmung der Eigenschaften - insbesondere der Viskosität - des fluiden Mediums als eine geeignete Signalgröße, wie eine Zeitperiodendauer, heranzuziehen. Auf diese Weise ergibt sich der Vorteil, dass zwei einander im Wesentlichen unabhängige Messergebnisse erhalten werden, die in zweckmäßiger Weise ferner eine Plausibilitätsüberprüfung des Messsignals und/oder der Messanordnung ermöglichen.

Die erfmdungsgemäße Messvorrichtung zur Messung von Eigenschaften eines fluiden Mediums weist im Wesentlichen auf:
a) eine Schwingungseinrichtung zur Anregung von Schwingungen in dem fluiden Medium und zur Ausgabe eines Sensorsignals;
b) eine Treibereinrichtung zum Treiben der Schwingungseinrichtung mit einem Anregungssignal;
c) eine Erfassungseinrichtung zur Erfassung des aus der Schwingungseinrichtung in Abhängigkeit von den Eigenschaften des fluiden Mediums und dem Anregungssignal ausgegebenen Sensorsignals; und
d) eine Auswerteeinrichtung zur Auswertung des aus der Schwingungseinrichtung ausgegebenen und mit der Erfassungseinrichtung erfassten Sensorsignals und zur Bestimmung der Eigenschaften des fluiden Mediums, wobei die Auswerteeinrichtung eine Zeitperioden-Auswerteeinheit zur Auswertung einer für die Eigenschaften des fluiden Mediums charakteristischen Zeitdauer des Sensorsignals aufweist.

Ferner weist das erfmdungsgemäße Messverfahren zum Messen von Eigenschaften eines fluiden Mediums im Wesentlichen die folgenden Schritte auf:
a) Anregen von Schwingungen in dem fluiden Medium und Ausgeben eines Sensorsignals mittels einer Schwingungseinrichtung;
b) Treiben der Schwingungseinrichtung mit einem Anregungssignal mittels einer Treibereinrichtung;
c) Erfassen des aus der Schwingungseinrichtung in Abhängigkeit von den Eigenschaften des fluiden Mediums und dem Anregungssignal ausgegebenen Sensorsignals mittels einer Erfassungseinrichtung; und
d) Auswerten des aus der Schwingungseinrichtung ausgegebenen und mit der Erfassungseinrichtung erfassten Sensorsignals und Bestimmen der Eigenschaften des fluiden Mediums mittels einer Auswerteeinrichtung, wobei mittels einer in der Auswerteeinrichtung bereitgestellten Zeitperioden-Auswerteeinheit eine für die Eigenschaften des fluiden Mediums charakteristische Zeitdauer des Sensorsignals ausgewertet wird.

In den Unteransprüchen finden sich vorteilhafte Weiterbildungen und Verbesserungen des jeweiligen Gegenstandes der vorliegenden Erfindung.

Gemäß einer bevorzugten Weiterbildung der vorliegenden Erfindung ist die Schwingungseinrichtung als ein Schwingquarz ausgebildet. In vorteilhafter Weist ist ein derartiger Schwingquarz als ein Dickenscherschwinger ausgelegt.

Gemäß einer weiteren bevorzugten Weiterbildung der vorliegenden Erfindung ist die Erfassungseinrichtung zur Erfassung des aus der Schwingungseinrichtung ausgegebenen Sensorsignals als eine Wandlereinheit ausgebildet. In vorteilhafter Weise setzt die Wandlereinheit das Sensorsignal in ein Spannungssignal um. Üblicherweise ist das Sensorsignal als ein Stromsignal ausgelegt.

Gemäß noch einer weiteren bevorzugten Weiterbildung der vorliegenden Erfindung weist die Zeitperioden-Auswerteeinheit zur Auswertung einer für die Eigenschaften des fluiden Mediums charakteristischen Zeitdauer des Sensorsignals eine Komparatoreinheit zur Bestimmung der für die Eigenschaften des fluiden Mediums charakteristischen Zeitdauer des Sensorsignals unter Verwendung erster und zweiter Referenzpegel auf. In vorteilhafter Weise lassen sich die ersten und zweiten Referenzpegel derart einstellen, dass Störungen, die dem Sensorsignal überlagert sind, eliminiert werden.

Gemäß noch einer weiteren Weiterbildung der vorliegenden Erfindung weist die Zeitperioden-Auswerteeinheit zur Auswertung einer für die Eigenschaften des fluiden Mediums charakteristischen Zeitdauer des Sensorsignals eine Zeitperioden-Bestimmungseinheit zur Erzeugung eines Zeitperioden-Ergebnissignals auf, welches die zu messende Eigenschaft des fluiden Mediums widerspiegelt.

Bei der Bestimmung der Eigenschaften des fluiden Mediums wird insbesondere die Viskosität des fluiden Mediums ausgegeben.

Die mittels der Komparatoreinheit unter Verwendung erster und zweiter Referenzpegel festgelegte Schaltschwelle der Komparatoreinheit bestimmt in vorteilhafter Weise neben den Eigenschaften des fluiden Mediums die charakteristische Zeitdauer des Sensorsignals.

In vorteilhafter Weise werden die ersten und zweiten Referenzpegel für die Komparatoreinheit derart festgelegt, dass ein dem Sensorsignal überlagertes Rauschsignal die Bestimmung der charakteristischen Zeitdauer nicht beeinflusst.

Auf diese Weise wird durch die erfindungsgemäße Messvorrichtung und das erfindungsgemäße Messverfahren erreicht, dass die Auswertung des von der Schwingungseinrichtung gelieferten Sensorsignals mit einer hohen Genauigkeit ohne Beeinflussung durch Störungen des Sensorsignals durchgeführt werden können.

### ZEICHNUNGEN

Ausführungsbeispiele der Erfindung sind in den Zeichnungen dargestellt und in der nachfolgenden Beschreibung näher erläutert.

In den Zeichnungen zeigen:
- Fig. 1: ein charakteristisches Blockbild der Messvorrichtung zur Messung der Eigenschaften eines fluiden Mediums gemäß einem bevorzugten Ausführungsbeispiel der vorliegenden Erfindung;
- Fig. 2(a): einen charakteristischer Verlauf eines Sensorsignals, dargestellt als eine Amplitude über einer Zeit, in Bezug auf ein von der Komparatoreinheit geliefertes Komparatorausgangssignal; und
- Fig. 2(b): ein nach einer Tiefpassfilterung des Sensorsignals bereitgestelltes gefiltertes Mischsignal als Funktion einer Zeit.

In den Figuren bezeichnen gleiche Bezugszeichen gleiche oder funktionsgleiche Komponenten oder Schritte.

### BESCHREIBUNG DER AUSFÜHRUNGSBEISPIELE

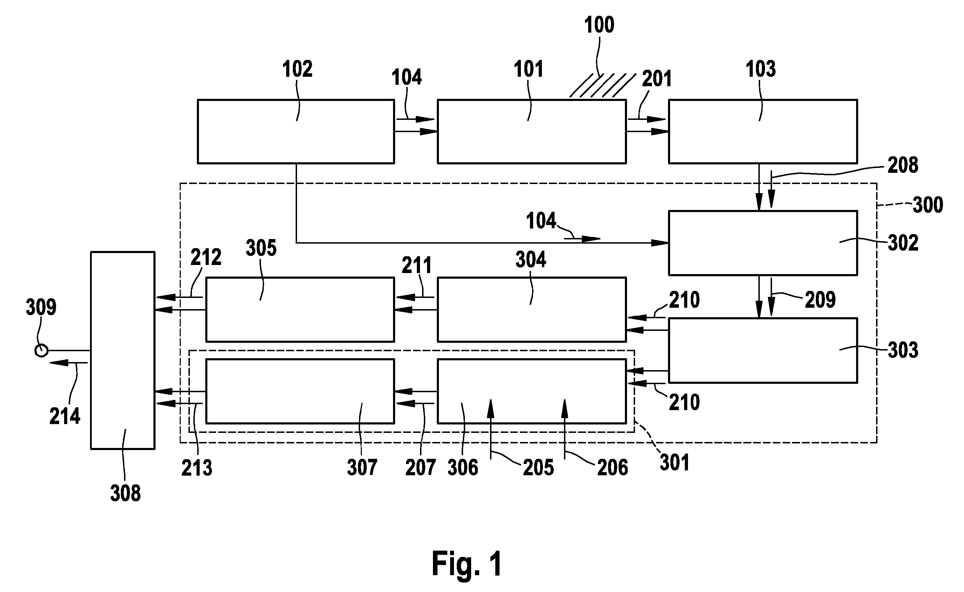

Fig. 1 zeigt ein Blockbild einer Messvorrichtung zur Messung von Eigenschaften eines fluiden Mediums 100 gemäß einem bevorzugten Ausführungsbeispiel der vorliegenden Erfindung. Wie in Fig. 1 gezeigt, wird das zu messende, fluide Medium 100 in Kontakt mit einer Schwingungseinrichtung 101 gebracht, die vorzugsweise als ein Schwingquarz ausgebildet ist. Ein Bezugszeichen 102 bezeichnet eine Treibereinrichtung, mit welcher es möglich ist, die Schwingungseinrichtung 101 unter Verwendung eines Anregungssignals 104 zu treiben. Ein in Abhängigkeit von dem Anregungssignal 104 und den Eigenschaften des fluiden Mediums 100 erzeugtes Sensorsignal 201 wird zu einer Erfassungseinrichtung 103 ausgegeben.

Es sei darauf hingewiesen, dass, obwohl unterschiedliche Eigenschaften eines fluiden Mediums 100 mit derartigen Schwingquarzmessungen erfassbar sind, die vorliegende Erfindung zur Messung von Viskositäten (dynamische und/oder statische Viskosität) des zu messenden fluiden Mediums 100 ausgelegt ist. Insbesondere ist die vorliegende Erfindung zur Messung hochviskoser Flüssigkeiten geeignet, da das Auswerteverfahren gegenüber Verfahren gemäß dem Stand der Technik eine höhere Genauigkeit liefert. Die Erfassungseinrichtung 103 dient als eine Wandlereinheit zur Umsetzung des aus der Schwingungseinrichtung 101 ausgegebenen Sensorsignals 201 in ein Spannungssignal 208. Üblicherweise ist die Schwingungseinrichtung 101 als ein Serienresonanzkreis aus einem Widerstand R und einer Kapazität L ausgelegt. Zur Feststellung der Resonanzfrequenz wird ein durch den Resonanzkreis fließender Strom in Abhängigkeit von der Anregungsfrequenz des Anregungssignals 104 gemessen. Zur weiteren Verarbeitung ist es vorteilhaft, das Spannungssignal 208 nach einer Wandlung in der Erfassungseinrichtung 103 heranzuziehen. Einer nachfolgenden Mischstufe, d.h. der Mischereinheit 302, wird nun sowohl das Spannungssignal 208 als auch das ursprüngliche Anregungssignal 104 zugeführt.

Die Mischereinheit 302 kann als ein Multiplizierer angesehen werden, der das Ausgangssignal der Erfassungseinrichtung 103, d.h. das Spannungssignal 208, und das Ausgangssignal der Treibereinrichtung 102, d.h. das Anregungssignal 104, miteinander mischt. Durch ein Wobbeln, d.h. ein Durchfahren eines spezifischen, charakteristischen Frequenzbereichs, ist es nunmehr möglich, die Resonanzfrequenz, die durch das zu messende fluide Medium und die Schaltungsauslegung der Schwingungseinrichtung 101 bestimmt wird, zu erfassen. Ein derartiges "Wobbeln" ist dem Fachmann bekannt und wird hier nicht näher erläutert werden.

Aus der Mischereinheit 302 wird durch die Mischung des Anregungssignals 104 mit dem Spannungssignal 208 schließlich ein Mischsignal 209 erhalten, welches einer Filtereinheit 303 zugeführt wird. Es sei darauf hingewiesen, dass sowohl die Mischereinheit 302 als auch die Filtereinheit 303 Bestandteile der Auswerteeinheit 300 sind. Die Auswerteeinrichtung 300 umfasst ferner eine Spitzenwert-Erfassungseinheit 304 und eine Spitzenwert-Bestimmungseinheit 305 sowie eine Zeitperioden-Auswerteeinheit 301. Erfindungsgemäß stehen somit zwei unterschiedliche Auswerteverfahren zur Auswertung des Sensorsignals 201 bereit.

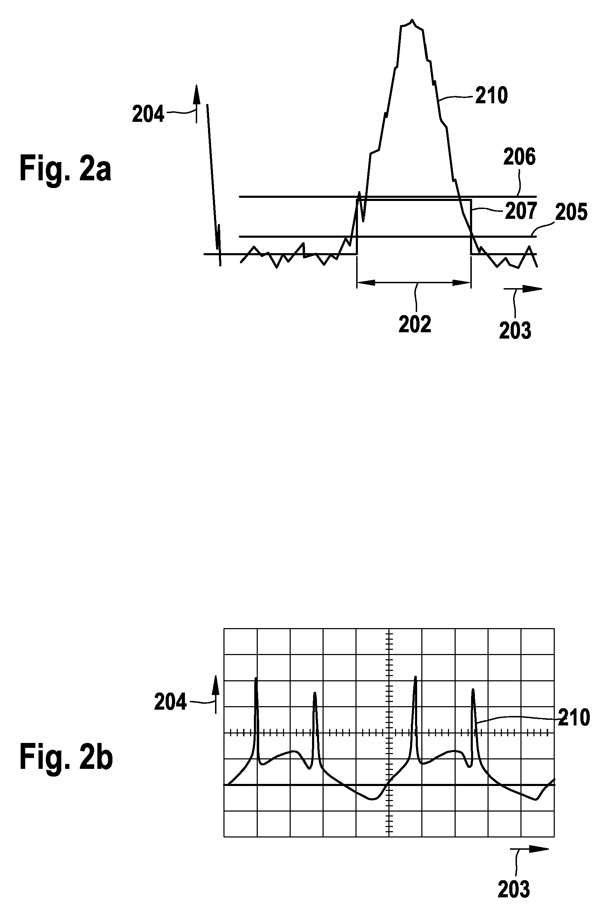

Das der Filtereinheit 301 zugeführte Mischsignal 209 wird in der Filtereinheit tiefpassgefiltert und als ein gefiltertes Mischsignal 210 ausgegeben, welches dann einerseits hinsichtlich der Amplitude in der Spitzenwert-Erfassungseinheit 304 und der Spitzenwert-Bestimmungseinheit 305 und andererseits hinsichtlich einer charakteristischen Zeitdauer 202 (unten stehend unter Bezugnahme auf Fig. 2(a) beschrieben) in der Zeitperioden-Auswerteeinheit 301 ausgewertet wird.

Die Zeitperioden-Auswerteeinheit 301 weist eine Komparatoreinheit 306 und eine Zeitperioden-Bestimmungseinheit 307 auf. Der Komparatoreinheit 306 wird ein erster Referenzpegel 305 (Unterreferenzpegel) und ein zweiter Referenzpegel 306 (oberer Referenzpegel) zugeführt. Die Einstellung der Referenzpegel in Bezug auf das zu messende gefilterte Mischsignal 210 wird unten stehend unter Bezugnahme auf Fig. 2(a) beschrieben werden. Ein durch den Vergleich des gefilterten Mischsignals 210 mit den ersten und zweiten Referenzpegeln 205 bzw. 206 erzeugtes Komparatorausgangssignal 207 wird aus der Komparatoreinheit 306 zu der Zeitperioden-Bestimmungseinheit 307 ausgegeben. Das Komparatorausgangssignal 207 ist ein digitales Signal, d.h. es schwankt zwischen den Zuständen "0" und "1".

An dem Ausgang der Auswerteeinrichtung 300 stehen somit zwei unterschiedliche Ergebnissignale bereit, d.h. ein Spitzenwert-Ergebnissignal 212, das von der Spitzenwert-Bestimmungseinheit 305 geliefert wird, und ein Zeitperioden-Ergebnissignal 213, das von der Zeitperioden-Bestimmungseinheit 307 geliefert wird. Die Funktionsweise der Zeitperioden-Auswerteeinheit 301, die die Komparatoreinheit 306 und die Zeitperioden-Bestimmungseinheit 307 aufweist, wird unten stehend unter Bezugnahme auf die Fig. 2(a) und 2(b) beschrieben werden. Im Folgenden sei kurz erläutert, dass die auch bei herkömmlichen Messvorrichtungen eingesetzte Spitzenwerterfassung in der Spitzenwert-Erfassungseinheit 304 durchgeführt wird. Hierzu wird das gefilterte Mischsignal 210 hinsichtlich des Spitzenwerts, d.h. der Maximalamplitude, ausgewertet.

Nach einer Erfassung des Spitzenwerts in der Spitzenwert-Erfassungseinheit 304 wird aus der Spitzenwert-Erfassungseinheit 304 ein Spitzenwertsignal 211 ausgegeben und der Spitzenwert-Bestimmungseinheit 305 zugeführt. Die Spitzenwert-Bestimmungseinheit 305 bestimmt anhand der bekannten elektrischen Parameter der Schwingungseinrichtung 101 und der zwischen der Schwingungseinrichtung 101 und der Spitzenwert-Bestimmungseinheit 305 angeordneten elektronischen Komponenten das Spitzenwert-Ergebnissignal, das die interessierende Eigenschaft des zu messenden fluiden Mediums 100 widerspiegelt. Sowohl das Spitzenwert-Ergebnissignal 212 als auch das Zeitperioden-Ergebnissignal 213 werden einer Anzeige-/Weiterverarbeitungseinheit 308 zugeführt. Die Anzeige-/Weiterverarbeitungseinheit 308 dient einer Anzeige und/oder einer Weiterverarbeitung der zugeführten Ergebnissignale, wobei die Anzeige-/Weiterverarbeitungseinheit 308 weiter eine Ausgabeeinheit 309 aufweist, um ein entsprechendes Eigenschaftssignal, d.h. einen Viskositätswert des zu messenden fluiden Mediums 100, auszugeben.

In Fig. 2(a) ist ein typischer Signalverlauf eines Sensorsignals nach einer Mischung und Filterung, d.h. ein typischer Signalverlauf des gefilterten Mischsignals 210 gezeigt. Aufgetragen ist eine Sensorsignalamplitude 204 über einer Zeit 203 des gefilterten Mischsignals 210. Wie in Fig. 2(a) gezeigt, weist das gefilterte Mischsignal 210 eine charakteristische Zeitdauer 202 auf, wie mittels der Komparatoreinheit 306 über eine Verwendung erster und zweiter Referenzpegel 205 bzw. 206 bestimmt werden kann. Zu diesem Zweck werden der Komparatoreinheit 306 die ersten und zweiten Referenzpegel 205, 206 zugeführt (siehe oben stehend Beschreibung unter Bezugnahme auf Fig. 1). Der erste Referenzpegel 205 wird als ein unterer Referenzpegel eingestellt, während der zweite Referenzpegel 206 als ein oberer Referenzpegel eingestellt wird. Wie in Fig. 2(a) veranschaulicht, wird insbesondere der untere Referenzpegel 205 derart eingestellt, bis er nicht bei einer Sensorsignalamplitude 204 von 0 V liegt, sondern geringfiigig erhöht ist, um Rauschen, das üblicherweise in dem gefilterten Mischsignal 210 vorhanden ist, derart zu eliminieren, dass die Zwischenmaxima des Rauschens nicht zu einem Schalten des Komparators führen. Wie in Fig. 2(a) veranschaulicht, schaltet der Komparator bei einem Überschreiten des ersten Referenzpegels 205 durch das gefilterte Mischsignal 210 ein, d.h. das Komparatorsignal 201 geht auf einen "1"-Zustand bzw. einen "Hoch"-Zustand, derart, dass es bis zu dem zweiten Referenzpegel 206 hin ausgesteuert wird. Eine derartige Ansteuerung von Komparatoren derart, dass eine maximale Aussteuerung bis zu einem Sättigungspegel, d.h. dem zweiten Referenzpegel 206 erfolgt, ist dem Fachmann bekannt und wird hier nicht näher erläutert werden.

Vorzugsweise ist die Komparatoreinheit 306 als ein Schmidt-Trigger mit einer Hysterese ausgebildet, um den Einfluss von Störungen, die dem gefilterten Mischsignal 210 überlagert sind, weiter abzusenken.

Fig. 2(b) verdeutlicht ein mit einem Oszilloskop aufgenommenes gefiltertes Mischsignal 210, wobei eine Sensorsignalamplitude 204 als Funktion einer Zeit 203 dargestellt ist.

Fig. 2(b) zeigt hierbei einen typischen Verlauf nach einer Tiefpassfilterung, wobei ersehen werden kann, dass das gefilterte Mischsignal 210 sowohl hinsichtlich seines Spitzenwerts als auch hinsichtlich seiner charakteristischen Zeitdauer 202 ausgewertet werden kann. Der prinzipielle Signalverlauf des gefilterten Mischsignals 210 entspricht denjenigen herkömmlicher Messanordnungen zur Viskositätsmessung, so dass eine Korrelation der Amplitude, d.h. des Spitzenwerts und/oder der charakteristischen Zeitdauer 202, mit den Eigenschaften des zu messenden fluiden Mediums hier nicht näher erläutert ist.

Obwohl die vorliegende Erfindung vorstehend anhand bevorzugter Ausführungsbeispiele beschrieben wurde, ist sie darauf nicht beschränkt, sondern auf vielfältige Weise modifizierbar.

Auch ist die Erfindung nicht auf die genannten Anwendungsmöglichkeiten beschränkt.

### Vorrichtung und Verfahren zur Messung von Eigenschaften eines fluiden Mediums

### BEZUGSZEICHENLISTE

In den Figuren bezeichnen gleiche Bezugszeichen gleiche oder funktionsgleiche Komponenten oder Schritte.

| | |
|---|---|
| 100 | Fluides Medium |
| 101 | Schwingungseinrichtung |
| 102 | Treibereinrichtung |
| 103 | Erfassungseinrichtung |
| 104 | Anregungssignal |
| 201 | Sensorsignal |
| 202 | Charakteristische Zeitdauer |
| 203 | Zeit |
| 204 | Sensorsignalamplitude |
| 205 | Erster Referenzpegel |
| 206 | Zweiter Referenzpegel |
| 207 | Komparatorausgangssignal |
| 208 | Spannungssignal |
| 209 | Mischsignal |
| 210 | Gefiltertes Mischsignal |
| 211 | Spitzenwertsignal |
| 212 | Spitzenwert-Ergebnissignal |
| 213 | Zeitperioden-Ergebnissignal |
| 214 | Eigenschaftssignal |
| 300 | Auswerteeinrichtung |
| 301 | Zeitperiodenauswerteeinheit |
| 302 | Mischereinheit |
| 303 | Filtereinheit |
| 304 | Spitzenwert-Erfassungseinheit |
| 305 | Spitzenwert-Bestimmungseinheit |
| 306 | Komparatoreinheit |
| 307 | Zeitperioden-Bestimmungseinheit |
| 308 | Anzeige/Weiterverarbeitungseinheit |
| 309 | Ausgabeeinheit |

## Patentansprüche

1. Messvorrichtung zur Messung von Eigenschaften eines fluiden Mediums (100), mit:
a) einer Schwingungseinrichtung (101) zur Anregung von Schwingungen in dem fluiden Medium (100) und zur Ausgabe eines Sensorsignals (201);
b) einer Treibereinrichtung (102) zum Treiben der Schwingungseinrichtung (101) mit einem Anregungssignal (104);
c) einer Erfassungseinrichtung (103) zur Erfassung des aus der Schwingungseinrichtung (101) in Abhängigkeit von den Eigenschaften des fluiden Mediums (100) und dem Anregungssignal (104) ausgegebenen Sensorsignals (201); und
d) einer Auswerteeinrichtung (300) zur Auswertung des aus der Schwingungseinrichtung (101) ausgegebenen und mit der Erfassungseinrichtung (103) erfassten Sensorsignals (201) und zur Bestimmung der Eigenschaften des fluiden Mediums (100),
**dadurch gekennzeichnet,**
**dass** die Auswerteeinrichtung (300) aufweist:
e) eine Zeitperiodenauswerteeinheit (301) zur Auswertung einer für die Eigenschaften des fluiden Mediums (100) charakteristischen Zeitdauer (202) des Sensorsignals (201).

2. Vorrichtung nach Anspruch 1,
**dadurch gekennzeichnet,**
**dass** die Schwingungseinrichtung (101) als ein Schwingquarz ausgebildet ist.

3. Vorrichtung nach Anspruch 1,
**dadurch gekennzeichnet,**
**dass** die Erfassungseinrichtung (103) zur Erfassung des aus der Schwingungseinrichtung ausgegebenen Sensorsignals (201) als eine Wandlereinheit zur Umsetzung des Sensorsignals (201) in ein Spannungssignal (208) ausgebildet ist.

4. Vorrichtung nach Anspruch 1,
**dadurch gekennzeichnet,**
**dass** die Zeitperiodenauswerteeinheit (301) zur Auswertung einer für die Eigenschaften des fluiden Mediums (100) charakteristischen Zeitdauer (202) des Sensorsignals (201) eine Komparatoreinheit (306) zur Bestimmung der für die Eigenschaften des fluiden Mediums (100) charakteristische Zeitdauer (202) des Sensorsignals (201) unter Verwendung erster und zweiter Referenzpegel (205, 206) aufweist.

5. Vorrichtung nach Anspruch 1,
**dadurch gekennzeichnet,**
**dass** die Zeitperiodenauswerteeinheit (301) zur Auswertung einer für die Eigenschaften des fluiden Mediums (100) charakteristischen Zeitdauer (202) des Sensorsignals (201) eine Zeitperioden-Bestimmungseinheit (307) zur Erzeugung eines Zeitperioden-Ergebnissignals (213), welches die zu messende Eigenschaft des fluiden Mediums (100) widerspiegelt, aufweist.

6. Verfahren zum Messen von Eigenschaften eines fluiden Mediums (100), mit den folgenden Schritten:
a) Anregen von Schwingungen in dem fluiden Medium (100) und Ausgeben eines Sensorsignals (201) mittels einer Schwingungseinrichtung (101);
b) Treiben der Schwingungseinrichtung (101) mit einem Anregungssignal (104) mittels einer Treibereinrichtung (102);
c) Erfassen des aus der Schwingungseinrichtung (101) in Abhängigkeit von den Eigenschaften des fluiden Mediums (100) und dem Anregungssignal (104) ausgegebenen Sensorsignals (201) mittels einer Erfassungseinrichtung (103); und
d) Auswerten des aus der Schwingungseinrichtung (101) ausgegebenen und mit der Erfassungseinrichtung (103) erfassten Sensorsignals (201) und Bestimmen der Eigenschaften des fluiden Mediums (100) mittels einer Auswerteeinrichtung (300),
**dadurch gekennzeichnet , dass**
e) mittels einer in der Auswerteeinrichtung (300) bereitgestellten Zeitperiodenauswerteeinheit (301) eine für die Eigenschaften des fluiden Mediums (100) charakteristische Zeitdauer (202) des Sensorsignals (201) ausgewertet wird.

7. Verfahren nach Anspruch 6,
**dadurch gekennzeichnet,**
**dass** bei der Bestimmung der Eigenschaften des fluiden Mediums (100) die Viskosität des fluiden Mediums (100) ausgegeben wird.

8. Verfahren nach Anspruch 6,
**dadurch gekennzeichnet,**
**dass** die zur Bestimmung der Eigenschaften des fluiden Mediums (100) charakteristische Zeitdauer (202) des Sensorsignals (201) mittels einer Komparatoreinheit (306) unter Verwendung erster und zweiter Referenzpegel (205, 206) festgelegt wird.

9. Verfahren nach Anspruch 8,
**dadurch gekennzeichnet,**
**dass** die ersten und zweiten Referenzpegel (205, 206) für die Komparatoreinheit (306) derart festgelegt werden, dass ein dem Sensorsignal (201) überlagertes Rauschsignal die Bestimmung der charakteristischen Zeitdauer (202) nicht beeinflusst
